# EUROPÄISCHE PATENTANMELDUNG

(11) **EP 2 537 627 A1**
(43) Veröffentlichungstag der Anmeldung: **26.12.2012**
(21) Anmeldenummer: 11007294.9
(22) Anmeldetag: 08.09.2011
(51) Int. Cl.: B23P 6/00, A47B 47/02, B65G 1/02

(54) **Verfahren und Mittel zur Instandsetzung von Metallregalen**

(30) Priorität: 21.06.2011 DE 102011104855
(71) Anmelder: Brackelmann, Dirk, 25554 Neuendorf-Sachsenbande (DE)
(72) Erfinder: Brackelmann, Dirk, 25554 Neuendorf-Sachsenbande (DE)
(74) Vertreter: Thomas, Götz

(57) **Zusammenfassung**

Die Erfindung betrifft ein Verfahren und Mittel zur Instandsetzung eines beschädigten Regals (10) mit einer Schadensstelle (24) an einem Tragprofil (12). Um einen Austausch des beschädigten Tragprofils (12) ohne jegliche Beeinträchtigung der Trag- und Verkehrssicherheit des in Stand gesetzten Regals (10) zu vermeiden, wird erfindungsgemäß vorgeschlagen, dass an dem Tragprofil (12) ein durch eine statische Berechnung als alleintragend nachgewiesenes Verstärkungsprofil (26) angebracht wird.

## Beschreibung

Die Erfindung betrifft ein Verfahren zur Instandsetzung eines beschädigten Regals, insbesondere eines Metallregals, gemäß dem Oberbegriff des Anspruchs 1 und Mittel zur Instandsetzung eines beschädigten Regals, insbesondere eines Metallregals, gemäß dem Oberbegriff des Anspruchs 12.

Regalanlagen für industrielle und gewerbliche Zwecke bestehen in der Regel aus Metallregalen, zum Beispiel Palettenregalen, Fachbodenregalen oder Regalen von Hochregallagern. Diese Regale umfassen zumeist zwei oder ggf. auch mehr Reihen von vertikalen Tragprofilen, die als Ständer bezeichnet werden, horizontale Längs- und Querstreben, die benachbarte Tragprofile miteinander verbinden und gewöhnlich auch als Auflage für Fach- oder Regalböden des Regals dienen, sowie diagonale Streben, die jeweils zwischen benachbarten horizontalen Streben für eine Versteifung der Tragprofile und eine gleichmäßigere Verteilung der Kräfte sorgen, die von den im Regal gelagerten Waren sowie vom Eigengewicht der Fach- oder Regalböden und der horizontalen Streben in die Tragprofile und von diesen in eine Stand- oder Stellfläche des Regals eingeleitet werden.

Bei der Einlagerung von Waren in derartigen Regalen oder bei ihrer Auslagerung werden die Regale gelegentlich beschädigt. Eine der häufigsten Schadensursachen ist hierbei das Anfahren von vertikalen Tragprofilen mit einem zur Ein- und Auslagerung verwendeten Transportfahrzeug, zum Beispiel einem Gabelstapler. Dabei können die Tragprofile so stark verformt werden, dass ihre Lasttragfunktion nicht mehr mit Sicherheit gewährleistet ist.

Normalerweise werden derartige verformte oder auf andere Weise beschädigte Tragprofile ausgetauscht, da gemäß der für die Instandsetzung von Regalen einschlägigen DIN-EN-15635:2009-08, Ziffer 9.7 Reparaturen von beschädigten Bauteilen von Regalen nicht zulässig sind, es sei denn, sie sind vom Lieferanten der Einrichtung genehmigt worden.

Ein Austausch eines beschädigten Tragprofils eines Regals macht es jedoch erforderlich, zuerst die angrenzenden Regalfelder zu entlasten, wodurch zumindest ein Teil des Regals geleert werden muss. Hierdurch werden zusätzlich zu den nicht unerheblichen Materialkosten des beschädigten Tragprofils sowie dem Aufwand für die Demontage des beschädigten Tragprofils und die Montage eines neuen Tragprofils auch unerwünschte Stillstandszeiten verursacht.

In einer Anmerkung zu Ziffer 9.7.1 der zuvor genannten DIN-EN-15635:2009-08 ist als Grund dafür, dass beschädigte Bauteile von Regalen nicht repariert sondern ausgetauscht werden sollten, angegeben, dass mit kaltverformten Materialien eine effektive Qualitätskontrolle schwer zu bewerkstelligen ist. Dabei ist man jedoch davon ausgegangen, dass die Reparatur unter Kaltverformung des ursprünglichen Tragprofils erfolgt, das nach seiner Reparatur wieder die ursprüngliche Lastübertragungsfunktion übernimmt.

Ausgehend hiervon liegt der Erfindung die Aufgabe zugrunde, ein Verfahren und Mittel zur Instandsetzung eines beschädigten Regals der eingangs genannten Art bereitzustellen, mit denen ein Austausch von beschädigten Tragprofilen ohne jegliche Beeinträchtigung der Trag- und Verkehrssicherheit des in Stand gesetzten Regals vermieden werden kann.

Diese Aufgabe wird bei dem eingangs genannten Verfahren zur Instandsetzung eines beschädigten Regals erfindungsgemäß dadurch gelöst, dass am Tragprofil ein durch eine vorangehende statische Berechnung als alleintragend nachgewiesenes Verstärkungsprofil angebracht wird, wobei es die Schadensstelle neben dem Tragprofil überbrückt. Demgegenüber wird im Hinblick auf die eingangs genannten Mittel zur Instandsetzung eines beschädigten Regals erfindungsgemäß vorgeschlagen, dass diese ein durch eine vorangehende statische Berechnung als alleintragend nachgewiesenes Verstärkungsprofil zur Anbringung am Tragprofil unter Überbrückung der Schadensstelle neben dem Tragprofil umfassen.

Als alleintragend nachgewiesen bedeutet hier, dass für das Verstärkungsprofil in statischer Hinsicht der rechnerische Nachweis erbracht worden ist, dass das Verstärkungsprofil alleine, d.h. ohne das zusätzlich noch vorhandene Tragprofil, in der Lage ist, die maximalen Belastungen aufzunehmen, die sich für das Tragprofil anteilig aus der Nutzlast des Regals und dessen Eigengewicht ergeben.

Der Erfindung liegt der Gedanke zugrunde, dass mit einem als alleintragend nachgewiesenen Verstärkungsprofil eine effektive Qualitätskontrolle des in Stand gesetzten Regals möglich ist, da das Verstärkungsprofil in der Lage ist, selbst im Falle eines vollständigen Versagens des beschädigten Tragprofils die gesamte zuvor von dem Tragprofil übertragene Last aufzunehmen. Da das Verstärkungsprofil unter Überbrückung der Schadensstelle am Tragprofil angebracht wird, wird jedoch in der Regel auch das Tragprofil selbst noch einen Teil der Belastung aufnehmen, so dass im Bereich der Schadensstelle stets ein ausreichendes Maß an Sicherheit vorhanden ist. Trotz des Nachweises, dass das Verstärkungsprofil alleintragend ist, wird das beschädigte Tragprofil jedoch nicht entfernt.

Aufgrund des Nachweises einer ausreichenden Dimensionierung des Verstärkungsprofils durch die der Instandsetzung vorangehende statische Berechnung kann darüber hinaus gewährleistet werden, dass die Trag- und Verkehrssicherheit des in Stand gesetzten Regals derjenigen des unbeschädigten Regals entspricht und dass auch gegenüber den zuständigen Aufsichtsbehörden ein Nachweis einer ausreichenden Sicherheit für das Gesamttragwerk erbracht werden kann.

Gemäß einer bevorzugten Ausgestaltung der Erfindung ist das Verstärkungsprofil ein U-Profil, welches das Tragprofil an drei Seiten umgreift, wobei die Länge des U-Profils größer als die Länge der Schadensstelle ist, so dass sich das U-Profil nach der Anbringung am Tragprofil nach oben und nach unten über die Schadensstelle hinaus bis in einen unverformten Abschnitt des Tragprofils erstreckt. Zur Befestigung am Tragprofil wird das U-Profil vorteilhaft so um das Tragprofil herumgelegt, dass ein Joch des U-Profils gegen eine ebene vertikale Seitenfläche des Tragprofils anliegt und zwei parallele Schenkel des U-Profils entweder gegen entgegengesetzte vertikale Seitenflächen des Tragprofils anliegen oder nur einen sehr geringen Abstand von diesen aufweisen. Sobald sich das Verstärkungsprofil in einer solchen Lage und Ausrichtung über die Schadensstelle hinweg erstreckt, wird es beiderseits der Schadensstelle, d.h. oberhalb und unterhalb von dieser, mit dem Tragprofil verschraubt.

Zumindest dort, wo die Schadensstelle einen nicht zu großen Abstand von einer Stell- oder Standfläche des Regals aufweist, auf der sich das untere Ende des beschädigten Tragprofils abstützt, wird das Verstärkungsprofil derart am Tragprofil montiert, dass es sich ebenfalls nach unten bis zu der Stel-oder Standfläche erstreckt. In diesem Fall wird ein Teil der Kräfte, die auf das beschädigte Tragprofil einwirken, durch die oberhalb von der Schadensstelle angeordnete Verschraubung in das Verstärkungsprofil übertragen und von diesem mindestens teilweise direkt in die Stell- oder Standfläche eingeleitet, d.h. ohne eine erneute Übertragung in das Tragprofil durch die unterhalb von der Schadensstelle angeordnete Verschraubung. Dadurch kann selbst im Falle eines unbeabsichtigten Lösens dieser unteren Verschraubung eine Beeinträchtigung der Trag-und Verkehrssicherheit des Regals vermieden werden.

Eine weitere bevorzugte Ausgestaltung der Erfindung sieht vor, zur Instandsetzung jedes Tragprofils ein bestimmtes, an den Querschnitt des Tragprofils angepasstes U-Profil zu verwenden, wobei die Anpassung derart ist, dass das U-Profil oberhalb und unterhalb der Schadensstelle eine Führung für das Tragprofil bildet, die sicherstellt, dass die oberhalb und unterhalb der Schadensstelle befindlichen Abschnitte des Tragprofils nach der Anbringung des U-Profils miteinander fluchten und damit eine zumindest näherungsweise vertikale Ausrichtung des Tragprofils im U-Profil sichergestellt wird. Dies wird bevorzugt mit einem U-Profil erreicht, dessen Schenkel nach der Anbringung an dem Tragprofil oberhalb und unterhalb der Schadensstelle einen Abstand von weniger als 1 mm und vorzugsweise von weniger als 0,5 mm von den gegenüberliegenden ebenen Seitenflächen des Tragprofils aufweisen.

Die Verschraubung des U-Profils mit dem Tragprofil erfolgt vorteilhaft oberhalb und unterhalb der Schadensstelle mit jeweils mindestens zwei Schrauben, die von einer Seite her durch fluchtende Bohrungen des U-Profils und des Tragprofils gesteckt und dann von der anderen Seite her mit Muttern gekontert werden. Zusätzlich können an der Schadensstelle eine oder mehrere weitere Schrauben von einer Seite her durch fluchtende Bohrungen des U-Profils und des Tragprofils gesteckt und dann von der anderen Seite her mit einer Mutter gekontert werden, um das Tragprofil im Bereich der Schadensstelle gegen das U-Profil zu ziehen und dadurch weiter zu begradigen.

Die Schrauben sind zweckmäßig parallel zu den Schenkeln des U-Profils ausgerichtet und durchsetzen fluchtende Bohrungen in einem Joch des U-Profils und einen zwischen den Schenkeln gegen das Joch anliegenden Teil des Tragprofils, können jedoch auch senkrecht zu den beiden Schenkeln des U-Profils ausgerichtet sein und fluchtende Bohrungen in den Schenkeln und in einem zwischen den Schenkeln angeordneten Teil des Tragprofils durchsetzen.

Um die Anbringung des U-Profil entlang der Schadensstelle am Tragprofil zu ermöglichen, ist es in der Regel erforderlich, das beschädigte bzw. verformte Tragprofil zu richten, d.h. soweit zu begradigen, dass es auch entlang der Schadensstelle in das um das Tragprofil herum gelegte U-Profil passt. Das Richten des Tragprofils kann vor der Anbringung des U-Profils mit geeigneten Werkzeugen erfolgen. Zu diesem Zweck können bei kleinen Profilquerschnitten oft schon Handwerkzeuge ausreichend sein, während bei größeren Profilquerschnitten und/oder bei warmgewalzten Tragprofilen eine hydraulische Presse verwendet werden kann, mit der sich Verformungskräfte von mehr als 25 Tonnen auf das Tragprofil ausüben lassen. Alternativ kann das Richten des Tragprofils auch mit Hilfe des U-Profils selbst erfolgen, indem dieses oberhalb von der Schadensstelle so an das Tragprofil angelegt wird, dass es das Tragprofil umgreift, und indem das U-Profil dann durch Ausüben von Schlag- oder Druckkräften in einer zu den Längsachsen des Tragprofils und des U-Profils parallelen Richtung nach unten geschlagen oder gedrückt wird, bis es sich mit seinem unteren Ende weit genug über die Schadensstelle hinweg bewegt hat und vorzugsweise gegen die Stand- oder Stellfläche des Tragprofils anliegt.

Bei der statischen Berechnung wird vorzugsweise nicht die Statik des gesamten Regals neu berechnet, sondern nur die Statik von einem oder mehr Regalfeldern, die an das beschädigte Tragprofil angrenzen. Dabei werden als Lastfälle eine vom Hersteller angegebene zulässige Nutzlast des Regals und das Eigengewicht der Tragprofile und der übrigen Komponenten des Regals berücksichtigt. Um der Verformung des beschädigten Tragprofils Rechnung zu tragen, wird darüber hinaus vorteilhaft noch ein Lastfall berücksichtigt, der einer durch die Verformung ggf. verursachten Imperfektion oder Schiefstellung des Tragprofils Rechnung trägt. Diese Lastfälle werden nach einer Gewichtung durch geeignete Lastfaktoren aufsummiert und der statischen Berechnung zugrunde gelegt.

Aus der Summe der gewichteten Lastfaktoren lassen sich unter Zugrundelegung der Fachwerkkonstruktion des Regals die auf das beschädigte Tragprofil einwirkenden maximalen Belastungen in Form von Druckkräften und Spannungen berechnen. Anschließend wird unter Berücksichtigung der Form und des Querschnitts sowie den Materialeigenschaften des ausgewählten Verstärkungsprofils geprüft, ob dieses ausreichend dimensioniert ist, um die zuvor berechneten maximalen Belastungen alleine zu tragen. Wenn dies der Fall ist, ist das Verstärkungsprofil durch die statische Berechnung als alleintragend nachgewiesen.

Wenn die Querschnittsfläche des Verstärkungs- oder U-Profils gemäß einer weiteren bevorzugten Ausgestaltung der Erfindung größer als die Querschnittsfläche des Tragprofils ist, wird das Verstärkungs- oder U-Profil durch die statische Berechnung in der Regel als alleintragend nachgewiesen werden. Unabhängig von den Querschnittsabmessungen des Tragprofils beträgt die Länge der Schenkel des U-Profils vorzugsweise immer 50 mm, bei einer bevorzugten Materialstärke des U-Profils von 5 mm.

Vorzugsweise umfasst die statische Berechnung jedoch nicht nur einen Nachweis dafür, dass das gewählte Verstärkungs- oder U-Profil alleintragend ist, sondern auch einen Nachweis dafür, dass die für die Verschraubung des U-Profils mit dem Tragprofil verwendeten Schrauben ausreichend dimensioniert sind, um die berechnete maximale Belastung oberhalb der Schadensstelle vom Tragprofil in das Verstärkungsprofil einzuleiten, und sie ggf. unterhalb der Schadensstelle wieder vom Verstärkungsprofil in das Tragprofil zu übertragen. In der Regel werden für die meisten Fälle M16-Schrauben ausreichend groß dimensioniert sein, wobei in der Regel Schrauben der Güte 8.8 ausreichend sind. Im Bedarfsfall können jedoch auch Schrauben der Güte 10.9 verwendet werden.

Im Folgenden wird die Erfindung anhand von einigen in der Zeichnung dargestellten Ausführungsbeispielen näher erläutert. Es zeigen:
Fig. 1 eine perspektivische Ansicht von zwei zur Vereinfachung ohne Regalböden dargestellten Regalfeldern eines Metallregals mit einer Schadensstelle an einem Tragprofil;
Fig. 2 eine Ansicht entsprechend Fig. 1, jedoch nach dem Richten des Tragprofils;
Fig. 3 eine Ansicht entsprechend Fig. 1, jedoch nach dem Anbringen eines die Schadensstelle überbrückenden U-Profils an dem gerichteten Tragprofil;
Fig. 4a und b vergrößerte Vorderseitenansichten des gerichteten Tragprofils und des daran angebrachten U-Profils;
Fig. 5 eine vergrößerte Querschnittsansicht des gerichteten Tragprofils und des daran angebrachten U-Profils;
Fig. 6 eine isometrische Ansicht der Belastung der Tragprofile des Metallregals mit dem Eigengewicht des Regals für eine statische Berechnung, mit der das U-Profil als alleintragend nachgewiesen wird;
Fig. 7 eine isometrische Ansicht der Belastung der Tragprofile des Metallregals mit der bei der statischen Berechnung ebenfalls berücksichtigten Nutzlast des Regals;
Fig. 8 eine isometrische Ansicht der Belastung der Tragprofile des Metallregals infolge einer Imperfektion oder Schiefstellung des beschädigten Tragprofils nach dem Richten, die bei der statischen Berechnung ebenfalls berücksichtigt wird.

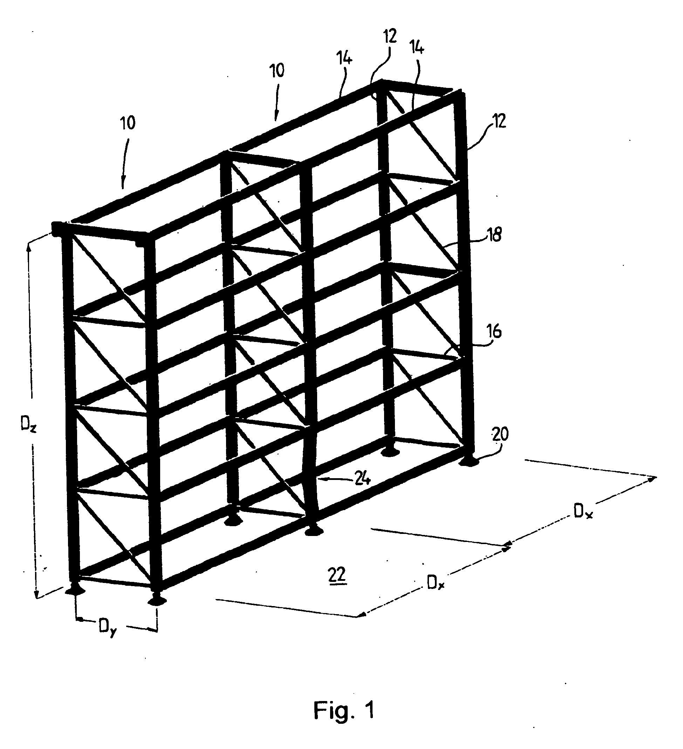

Die beiden in den Figuren 1 bis 3 nur teilweise, d.h. ohne Regalböden nebeneinander dargestellten Regalfelder 10 einer für gewerbliche Zwecke, zum Beispiel zur Lagerung von Waren bestimmten Regalanlage bestehen wie die übrigen Regalfelder der Regalanlage im Wesentlichen aus vertikalen Tragprofilen, die nachfolgend als Ständer 12 bezeichnet und paarweise hintereinander angeordnet sowie mit benachbarten Ständern 12 verbunden sind, fünf übereinander angeordneten Paaren von horizontalen Längsträgern oder Längsstreben 14, die benachbarte Paare von Ständern 12 miteinander verbinden und als Auflage für die nicht dargestellten Regalböden dienen, fünf zueinander parallelen Querstreben 16, welche die beiden Ständer 12 jedes Ständerpaars miteinander verbinden, sowie vier parallelen Diagonalstreben 18, die jeweils zwischen zwei benachbarten Querstreben 16 angeordnet sind und ebenfalls die beiden Ständer 12 jedes Ständerpaars miteinander verbinden.

Die über höhenverstellbare Füße 20 auf einer ebenen Stand- oder Stellfläche 22 des Regals 10 abgestützten Ständer 12 dienen dazu, das Gewicht der in der Regalanlage gelagerten Waren, mit anderen Worten deren Nutzlast, sowie das Eigengewicht der Regalanlage aufzunehmen und in die Stand- oder Stellfläche 22 abzuleiten.

Bei den in Fig. 1 dargestellten Regalfeldern 10 ist der vordere Ständer 12 des zwischen den beiden Regalfeldern 10 angeordneten Ständerpaars durch Anfahren unter Verformung beschädigt worden. Der Bereich, in dem der Ständer 12 verformt ist, wird hier als Schadensstelle 24 bezeichnet.

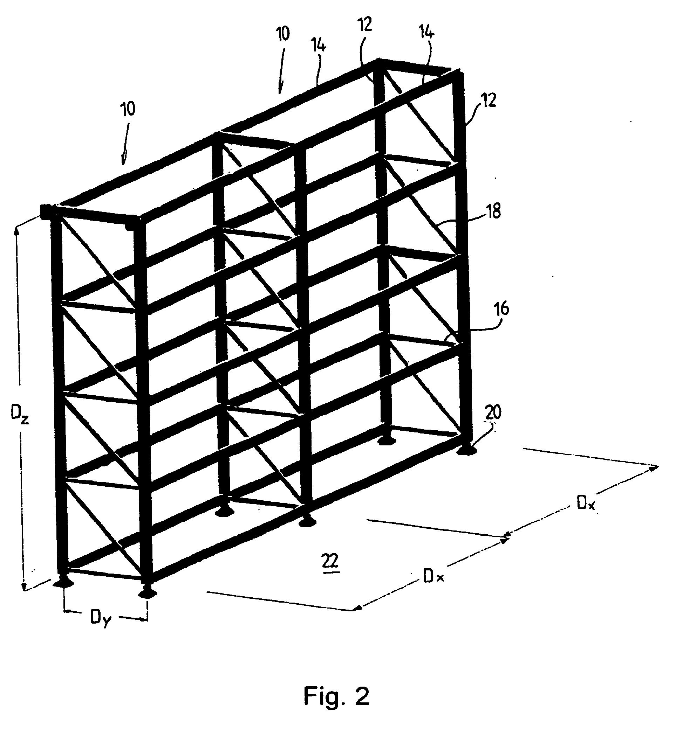

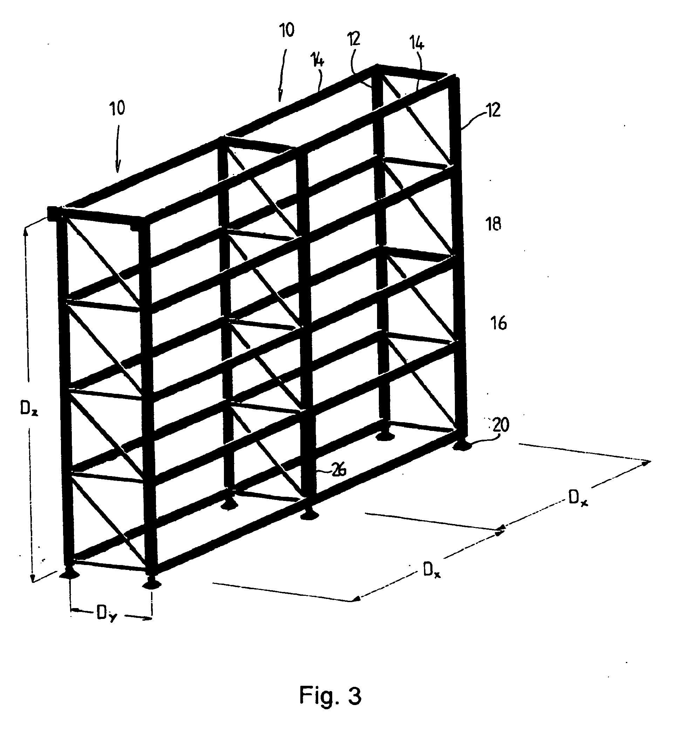

Zur Instandsetzung der beschädigten Regalanlage werden zuerst die Regalfelder 10 vermessen, wobei die horizontalen und die vertikalen Abstände Dx, Dy der Ständer 12 bzw. der Längsstreben 14 und der Querstreben 16, die Höhe Dz der Regalfelder 10 sowie die Abmessungen der Ständer 12, aller Streben 14, 16, 18 sowie ggf. der Regalböden ermittelt werden, um das Eigengewicht jedes Regalfelds 10 zu berechnen. Weiter wird aus Herstellerangaben die Nutzlast der Regalanlage ermittelt und daraus die Nutzlast jedes Regalfeldes 10 berechnet. Auf der Grundlage der Querschnittsabmessungen des beschädigten Ständers 12 wird anschließend ein spezielles, an den beschädigten Ständer 12 angepasstes U-Profil 26 ausgewählt, das bei der Instandsetzung nach einem Richten des verformten Ständers 12 (Fig. 2) unter Überbrückung der Schadensstelle 24 am Ständer 12 angebracht werden soll, wie in nachfolgend unter Bezugnahme auf die Figuren 3 bis 8 beschrieben wird.

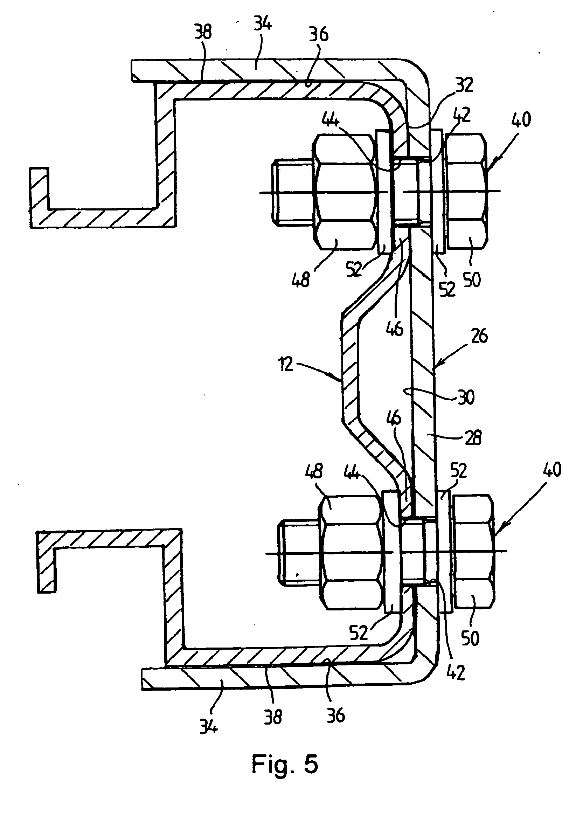

Wie am besten in Fig. 5 dargestellt, wird ein solches U-Profil 26 ausgewählt, das oberhalb und unterhalb der Schadensstelle 24, d.h. im Bereich des unverformten Ständers 12, derart um den Ständer 12 herum gelegt werden kann, dass ein Joch 28 des U-Profils 26 mit seiner ebenen Innenseite 30 mindestens teilweise gegen eine gegenüberliegende ebene Breitseitenfläche 32 des Ständers 12 anliegt und zwei parallele Schenkel 34 des U-Profils 26 mit ihren ebenen Innenseiten 36 gegen entgegengesetzte parallele Seitenflächen 38 des Ständers 12 anliegen oder von diesen einen Abstand von weniger als 0,5 mm aufweisen. Mit anderen Worten wird für jeden Ständer 12 mit anderen Querschnittsabmessungen auch ein anderes U-Profil 26 gewählt.

Wie am besten in Fig. 5 dargestellt, weist das ausgewählte U-Profil 26 eine etwas größere Materialstärke als der Ständer 12 auf, so dass die Querschnittsfläche des U-Profils 26 mindestens der Querschnittsfläche des Ständers 12 entspricht. Demgegenüber werden sich die Querschnittsformen des Ständers 12 und des U-Profils 26 zumeist unterscheiden, wie dies auch bei dem in Fig. 5 beispielhaft dargestellten Ständer 12 der Fall ist.

Nach der Auswahl des U-Profils 26 und vor dessen Anbringung am Ständer 12 wird eine statische Berechnung durchgeführt, um das ausgewählte U-Profil 26 als alleintragend nachzuweisen. Dabei soll der Nachweis erbracht werden, dass dieses U-Profil 26 allein, d.h. ohne den Ständer 12, um den es herum gelegt wird, in der Lage ist, die maximalen Belastungen auszuhalten, für die der Ständer 12 ausgelegt ist, d.h. für die maximalen Belastungen, die infolge der Nutzlast und des Eigengewichts der Regalanlage bzw. der benachbarten Regalfelder 10 anteilig vom Ständer 12 in die Stand- oder Stellfläche 22 eingeleitet werden müssen.

Bei der statischen Berechnung werden drei Lastfälle angenommen, nämlich a) das Eigengewicht der Regalanlage in einem Bereich, in dem das Eigengewicht die Belastung des beschädigten Ständers 12 beeinflusst, im vorliegenden Fall das Eigengewicht der beiden Regalfelder 10, die zu dem beschädigten Ständer 12 benachbart sind, b) die Nutzlast der Regalanlage in einem Bereich, in dem sie die Belastung des beschädigten Ständers 12 beeinflusst, im vorliegenden Fall die Nutzlast der beiden Regalfelder 10, die zu dem beschädigten Ständer 12 benachbart sind, sowie c) eine durch die Verformung des beschädigten Ständers 12 hervorgerufene und nach dem Richten des Ständers 12 ggf. nicht ganz beseitigte Imperfektion, die zum Beispiel zu einer leichten Neigung oder Schiefstellung des gerichteten Ständers 12 oberhalb der Schadensstelle 24 führen kann, da eine solche Imperfektion die Belastung des gerichteten Ständers 12 und damit auch eines alleintragenden U-Profils 26 beeinflusst.

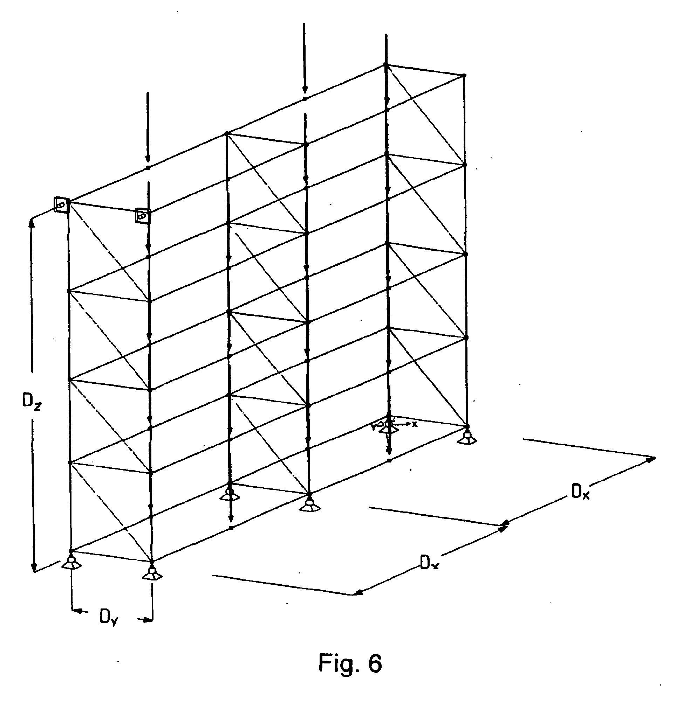

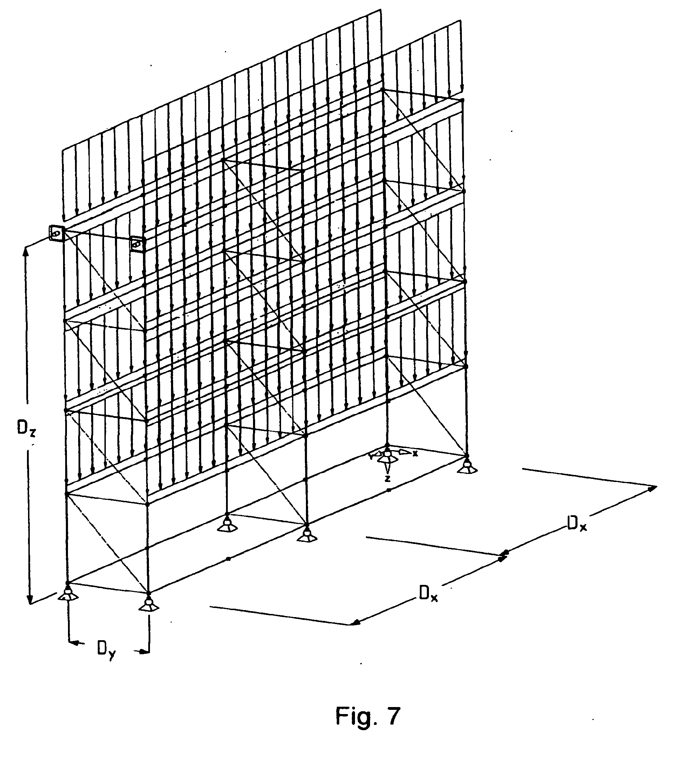

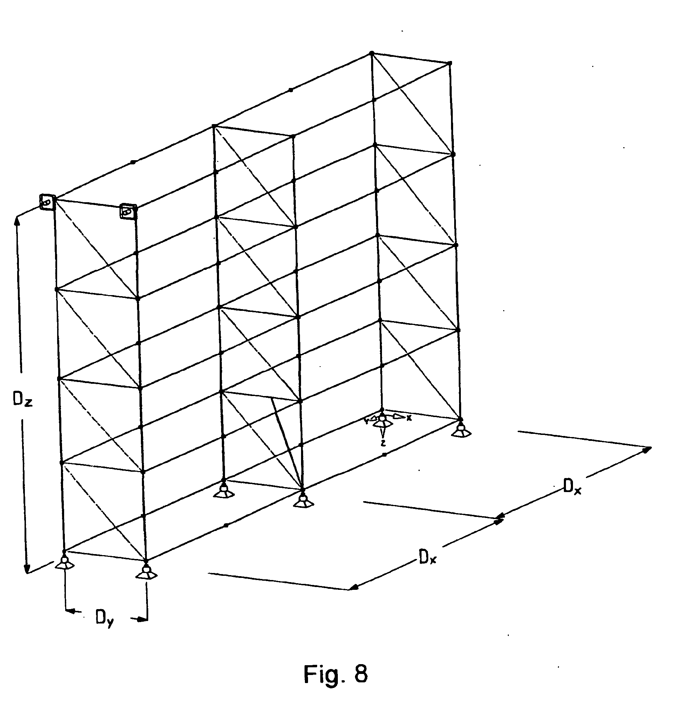

Für sämtliche drei Lastfälle werden für die beiden Regalfelder 10 Isometrien angefertigt, wie in Fig. 6 für den Lastfall a), in Fig. 7 für den Lastfall b) und in Fig. 8 für den Lastfall c) dargestellt. Die Isometrien bilden ein dreidimensionales Stabfachwerk oder Stabachsensystem ab, dessen Stäbe von den an Knotenpunkten miteinander verbundenen Ständern, Längsträgern, Querstreben und Diagonalstreben gebildet werden. Die Isometrien enthalten darüber hinaus die Abstände Dx und Dy zwischen benachbarten Ständern 12 sowie die Höhe Dz des Regals in Richtung eines kartesischen Koordinatensystems, dessen Achsen X, Y und Z parallel zu den Längsträgern 14, den Querstreben 16 bzw. den Ständern 12 ausgerichtet sind.

Unter Zugrundelegung der drei Lastfälle, die jeweils mit einem geeigneten Gewichtungsfaktor multipliziert und dann summiert werden, wird dann die maximale Belastung des beschädigten Ständers 12 berechnet, bevor unter Berücksichtigung des Materials, der Querschnittsform und der Querschnittsabmessungen des ausgewählten U-Profils 26 überprüft wird, ob dieses geeignet ist, die berechnete maximale Belastung aufzunehmen.

Wenn dies der Fall ist, ist das U-Profil 26 durch die statische Berechnung als alleintragend nachgewiesen und kann an dem beschädigten Ständer 12 angebracht werden, nachdem dieser zuvor gerichtet worden ist, wie in Fig. 2 bzw. 3 dargestellt.

Das Richten des Ständers 12, bei dem die Verformung an der Schadensstelle 24 soweit wie möglich beseitigt wird, kann mit geeigneten Werkzeugen und/oder mit Hilfe des U-Profils 26 erfolgen, das oberhalb der Schadensstelle 24 um den Ständer 12 herum gelegt wird, wie in Fig. 5 dargestellt, und dann nach unten gedrückt oder geschlagen wird, um es über die Schadensstelle 24 hinweg zu bewegen und dabei den verformten Ständer 12 zumindest zwischen den beiden Schenkeln 34 des U-Profils 26 in einer zu den Längsträgern 14 parallelen Richtung zu begradigen.

Die Länge des zur Instandsetzung verwendeten U-Profils 26 wird so gewählt, dass es die Schadensstelle 24 des Ständers 12 überbrückt und oberhalb und unterhalb der Schadensstelle 24 durch Verschraubung mit mehreren Befestigungsschrauben 40 an einem unverformten Abschnitt des Ständers 12 festgeschraubt werden kann, der sich zwischen den Verschraubungen durchgehend neben dem U-Profil 26 her erstreckt, d.h. nicht entfernt wird.

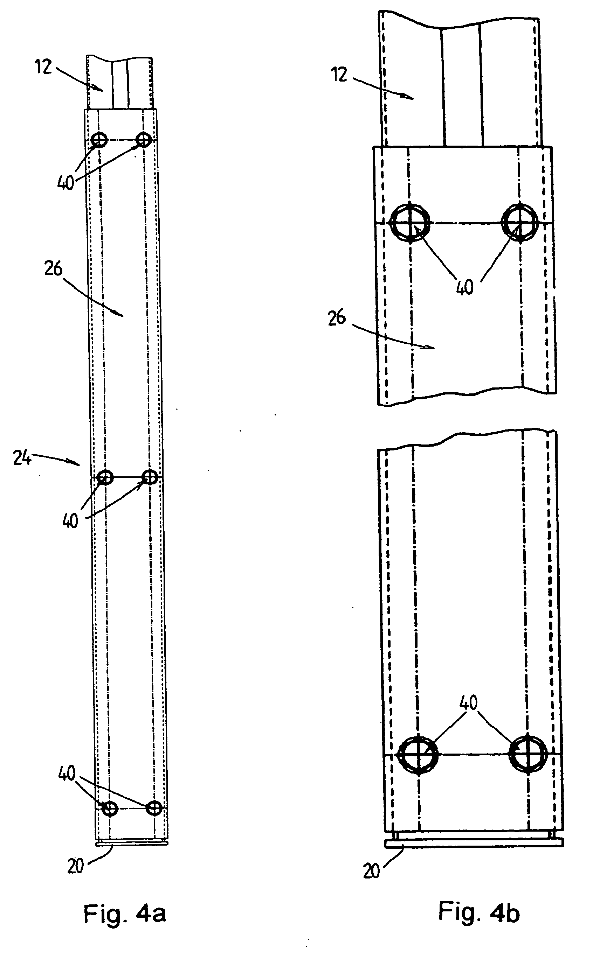

Wie in den Figuren 4a und 4b dargestellt, kann im Bereich der Schadensstelle 24 eine weitere Verschraubung mit zwei Befestigungsschrauben 40 vorgesehen sein, um dort den bereits gerichteten Ständer 12 gegen das U-Profil 26 zu ziehen und weiter zu begradigen.

Die verwendeten Befestigungsschrauben 40 werden auf der Grundlage der zuvor durchgeführten statischen Berechnung ausgewählt, da sie imstande sein müssen, die maximale Belastung des Ständers 12 oberhalb der Schadensstelle 24 in das U-Profil 26 und unterhalb der Schadensstelle 26 wieder in den Ständer 12 zurück zu übertragen, sofern die Höhenverstellbarkeit des beschädigten Ständers 12 bewahrt werden soll und daher das U-Profil 26 nicht mit seinem unteren Ende auf der Stand- oder Stellfläche 22 abgestützt werden kann.

Wie in Fig. 5 dargestellt, werden die Befestigungsschrauben 40 jeweils durch zwei fluchtende Durchgangsbohrungen 42, 44 im Joch 28 des U-Profils 26 und in einem benachbarten Teil 46 des Ständers 12 gesteckt und mit Muttern 48 gekontert, die von Hand so fest wie möglich angezogen werden. Zwischen dem Kopf 50 von jeder der Befestigungsschrauben 40 und dem U-Profil 26 sowie zwischen der zugehörigen Mutter 48 und dem dazu benachbarten Teil 46 des Ständers 12 wird jeweils eine Unterlegscheibe 52 angeordnet, um die Anpresskraft zu vergleichmäßigen.

## Patentansprüche

1. Verfahren zur Instandsetzung eines beschädigten Regals mit einer Schadensstelle an einem Tragprofil, **dadurch gekennzeichnet, dass** an dem Tragprofil (12) ein durch eine statische Berechnung als alleintragend nachgewiesenes Verstärkungsprofil (26) angebracht wird.

2. Verfahren nach Anspruch 1, **dadurch gekennzeichnet, dass** das Verstärkungsprofil (26) ein das Tragprofil (12) umgreifendes U-Profil (26) ist, das sich nach oben und nach unten über die Schadensstelle (24) hinaus erstreckt und oberhalb und unterhalb der Schadensstelle (24) mit dem durchgehenden Tragprofil (12) verschraubt wird.

3. Verfahren nach Anspruch 1 oder 2, **dadurch gekennzeichnet, dass** sich das Verstärkungsprofil (26) bis zu einer Stand- oder Stellfläche (20) erstreckt, auf der sich das untere Ende des Tragprofils (26) abstützt.

4. Verfahren nach Anspruch 2 oder 3, **dadurch gekennzeichnet, dass** das U-Profil (26) so an das Tragprofil (12) angepasst wird, dass oberhalb und unterhalb der Schadensstelle (24) zwischen zwei Schenkeln (34) des U-Profils (26) und gegenüberliegenden äußeren Oberflächen (38) des Tragprofils (12) ein Abstand von weniger als 1 mm und vorzugsweise von weniger als 0,5 mm vorhanden ist.

5. Verfahren nach einem der Ansprüche 2 bis 4, **dadurch gekennzeichnet, dass** das beschädigte Tragprofil (12) vor oder während der Anbringung des U-Profils (26) gerichtet wird, so dass es im Bereich der Schadensstelle (24) in das U-Profil (26) passt.

6. Verfahren nach einem der vorangehenden Ansprüche, **dadurch gekennzeichnet, dass** bei der statischen Berechnung nur die Statik von einem oder mehr Regalfeldern (10) berechnet wird, die an das beschädigte Tragprofil (12) angrenzen.

7. Verfahren nach Anspruch 6, **dadurch gekennzeichnet, dass** bei der statischen Berechnung eine vom Hersteller angegebene zulässige Nutzlast des Regals (10), das Eigengewicht der Tragprofile (12) und der übrigen Komponenten (14, 16, 18) des Regals (10) sowie eine durch die Verformung verursachte Imperfektion oder Schiefstellung des beschädigten Tragprofils (12) als Lastfälle berücksichtigt werden.

8. Verfahren nach Anspruch 7, **dadurch gekennzeichnet, dass** sämtliche Lastfälle nach einer Gewichtung durch geeignete Lastfaktoren aufsummiert und der statischen Berechnung zugrunde gelegt werden.

9. Verfahren nach Anspruch 8, **dadurch gekennzeichnet, dass** aus der Summe der gewichteten Lastfaktoren unter Zugrundelegung der Fachwerkkonstruktion des Regals (10) die auf das beschädigte Tragprofil (12) einwirkenden maximalen Belastungen in Form von Druckkräften und Spannungen berechnet werden und dass anschließend unter Berücksichtigung der Form und des Querschnitts sowie der Materialeigenschaften des ausgewählten Verstärkungsprofils (26) geprüft wird, ob dieses ausreichend dimensioniert ist, um die berechneten maximalen Belastungen alleine zu tragen.

10. Verfahren nach einem der vorangehenden Ansprüche, **dadurch gekennzeichnet, dass** zum Verschrauben des U-Profils (26) mit dem Tragprofil (12) Schrauben (40) verwendet werden, die bei der statischen Berechnung als ausreichend dimensioniert nachgewiesen werden.

11. Verfahren nach Anspruch 10, **dadurch gekennzeichnet, dass** die Schrauben als ausreichend dimensioniert nachgewiesen werden, wenn sie imstande sind, eine berechnete maximale Belastung oberhalb der Schadensstelle (24) vom Tragprofil (12) in das Verstärkungsprofil (26) einzuleiten und die berechnete maximale Belastung ggf. unterhalb der Schadensstelle (24) wieder vom Verstärkungsprofil (26) in das Tragprofil (12) zu übertragen.

12. Mittel zur Instandsetzung eines beschädigten Metallregals mit einer Schadensstelle an einem Tragprofil, **gekennzeichnet durch** ein **durch** eine statische Berechnung als alleintragend nachgewiesenes Verstärkungsprofil (26) zur Anbringung am Tragprofil (12) unter Überbrückung der Schadensstelle (24).

13. Mittel zur Instandsetzung eines beschädigten Metallregals nach Anspruch 12, **dadurch gekennzeichnet, dass** das Verstärkungsprofil ein U-Profil (26) mit einer Länge ist, die größer als die Länge der Schadensstelle (24) ist.

14. Mittel zur Instandsetzung eines beschädigten Metallregals nach Anspruch 12 oder 13, **dadurch gekennzeichnet, dass** das Verstärkungsprofil (26) eine Querschnittsfläche aufweist, die mindestens der Querschnittsfläche des Tragprofils (12) entspricht.

15. Mittel zur Instandsetzung eines beschädigten Metallregals nach einem der Ansprüche 12 bis 14, **dadurch gekennzeichnet, dass** das U-Profil eine Schenkellänge von 50 mm und eine Materialstärke von 5 mm aufweist.
